# EUROPEAN PATENT APPLICATION

(11) **EP 4 674 499 A1**
(43) Date of publication of application: **07.01.2026**
(21) Application number: 24185329.0
(22) Date of filing: 28.06.2024
(51) Int. Cl.: B01D 29/11, F02M 61/16, B01D 46/24

(54) **FILTERING UNIT AND FUEL SUPPLY SYSTEM**

(71) Applicant: Robert Bosch GmbH, 70442 Stuttgart (DE)
(72) Inventor: Pedron, Jerome, 38540 Heyrieux (FR); Picaud, Jerome, 38230 Tignieu-Jameyzieu (FR)

(57) **Abstract**

The present invention relates to a filtering unit (100) for filtering of a hydrogen containing fluid, the filtering unit (100) comprising:
- a filter (101),
- a connector (103),
- a plug (105),
- a holder (107),
wherein the connector (103) is connected to the filter (101) at a first end (109) of the filter (101) and the plug (105) is connected to the filter (101) at a second end (111) of the filter (101), opposite to the first end (109), and
wherein the holder (107) comprises a cylindrical spiral (113) that holds the filter (101) in a cylindrical shape.

## Description

The present invention relates to a filtering unit, a fuel supply system, and a method for manufacturing a filtering unit, according to the attached claims.

### State of the art

Filtering units are used in fuel supply systems for filtering out contaminations in a fluid that is supplied to a consumer, such as a fuel-cell.

Known filtering units are based on filters that include bores to be attached to a holder for holding the filter in position within a cylindrical casing. These bores must be deburred externally and internally.

Since such a holder is formed from a single part, a lot of material needs to be removed from a holder.

### Disclosure of the invention

According to a first aspect of the present invention, a filtering unit for filtering of a hydrogen containing fluid is disclosed.

The filtering unit comprises a filter, a connector, a plug and a holder, wherein the connector is connected to the filter at a first end of the filter and the plug is connect to the filter at a second end of the filter, opposite to the first end, and wherein the holder comprises a cylindrical spiral that holds the filter in a cylindrical shape.

The present invention serves to provide a cost- and material-efficient filtering unit.

The present invention is based on a special holder that comprises a cylindrical spiral and that holds the filter in a cylindrical shape.

By using a cylindrical spiral instead of a complex structure providing bores in various directions, a filter, such as a mesh or a sintered material, can be kept in a cylindrical shape by a very low amount of material. Thus, the holder according to the filtering unit disclosed herein is material- and cost effective.

In particular, the filter may be configured for holding back contaminations larger than 5µm or 10µm in diameter.

The cylindrical spiral of the holder also provides large areas for enabling a stream of fluid to flow through the holder and the filter. Thus, the filtering unit disclosed herein is also very efficient with respect to a mass of fluid to be filtered in a given time window. This means that the filtering unit is able to be used with high load.

The holder may comprise a stiff or unloaded spiral that is arranged on an inner part of the filter, such that the holder is surrounded by the filter, at least in part.

Optionally, the holder may be arranged on an outer part of the filter such that the filter is surrounded by the holder, at least partially.

According to an embodiment, the holder includes a spring.

A spring is a simple part that can be purchased at low costs and that is made without any waste of material.

Further, a spring has a shape that provides large areas for a fluid to stream through. Thus, the flow resistance of a spring is very low.

According to another embodiment, the spring is one of a torsion spring, compression spring, or extension spring.

Loaded springs, i.e. torsion springs, compression springs, or extension springs, provide for a force that acts on the filter to hold the filter in a cylindrical shape. Thus, a holder comprising a loaded spring may be clamped between the connector and the plug to ensure a load on the spring.

According to another embodiment, the holder is made from at least one material of the following list of materials: wire, plastic, metal, rubber.

A holder made from plastic may be 3D-printed, for example, whereas a holder made from metal, in particular a wire, provides for a high spring force holding the filter in its cylindrical shape.

A holder made from rubber is very durable and resistant to deformation.

According to another embodiment, a slope of the spiral of the holder varies along the holder.

A varying slope provides for a varying force acting on the filter and a varying surface for areas enabling a stream of fluid to flow through the holder and the filter. Thus, the flow characteristics and mechanical characteristics of the filter may be adjusted using a varying slope of the holder.

Thus, according to another embodiment, the holder has a steeper slope at both ends than in an area between the ends.

In particular, the slope of the holder may have a minimum in an area where the holder is in contact with a connector and a maximum in an area between the connectors.

According to another embodiment, the filter is crimped or welded to the connector and/or the plug.

For connection of the filter with the connectors, a process that ensures a fluid tight connection is favourable to ensure the fluid transits through the filter and does pass the filter.

In particular, the filtering unit can work in both directions. Thus, the stream of Fluid may flow form the plug to the connector or from the connector to the plug.

According to another embodiment, the filtering unit is configured to be run through by a fluid flow in a first direction from the first end to the second end and/or in a second direction from the second end to the first end.

Since in particular in fuel-cell systems, fuel flows through the conduits in both ways, i.e. from the tanks and towards the tanks, a filtering unit that is configured to be run through by a fluid flow in a first direction from the first end to the second end and/or in a second direction from the second end to the first end, ensures filtering of the fluid in every direction of movement of the fluid.

According to a second aspect, the present invention relates to a fuel supply system.

The fuel supply system comprises a receiver in which an embodiment of the filtering unit disclosed herein is arranged, and a number of conduits, wherein between the filter of the filtering unit and the receiver, a path is formed that is configured to guide fuel streaming out of the filtering unit into a conduit of the number of conduits.

The receiver of the fuel supply system disclosed herein is configured to receive the filtering unit disclosed herein, such that a fluid path is provided that leads fluid streaming from a fluid source, such as a tank, through the filtering unit, in particular through the filter and towards a consumer, such as a fuel-cell stack, for example.

The receiver may be configured to receive and secure the filtering unit exchangeably, such that a filled or damaged filtering unit can be replaced by a new filtering unit. Thus, the receiver may include a connection interface, such as a screw connection for securing the filtering unit.

Thus, according to an embodiment, the fuel supply system is configured to supply a consumer with hydrogen.

The consumer may be a fuel-cell system, a hydrogen motor or a tank provided with hydrogen from an electrolysis system.

According to a third aspect, the present invention relates to a method for manufacturing a filtering unit.

The method comprises placing a holder comprising a cylindrical spiral inside a filter to hold the filter in a cylindrical shape, connecting a connector to a filter at a first end of the filter, and connecting a plug to the filter at a second end of the filter, opposite to the first end.

It is to be understood that the features mentioned above, and those yet to be explained below can be used not only in the respective combinations indicated, but also in other combinations or in isolation, without leaving the scope of the present invention. In particular, the features of the different aspects, embodiments, and/or methods of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Figure 1 shows a filtering unit according to the prior art,
Figure 2 shows an embodiment of the filtering unit disclosed herein, arranged in an embodiment of the fuel supply system disclosed herein,
Figure 3 shows an embodiment of the method disclosed herein.

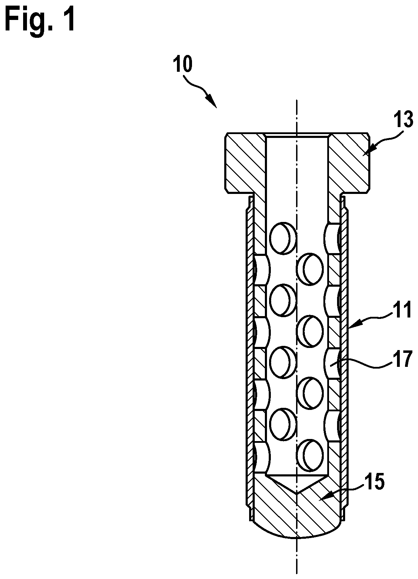

In Fig. 1, a filtering unit 10 is shown. The filtering unit 10 comprises a filter 11, a holder 13, and a plug 15.

The holder 13 is formed out of one block of material and comprises a number of channels 17 that extend through the holder 13 to the filter 11. Thus, a lot of material needs to be removed from the block to form the holder 13.

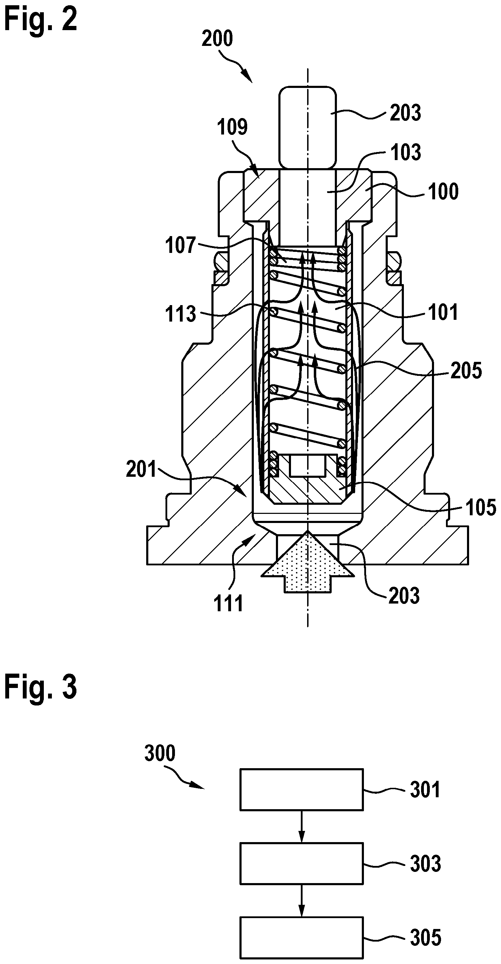

In Fig. 2, a filtering unit 100 for filtering of a hydrogen containing fluid is shown.

The filtering unit 100 comprises a filter 101, a connector 103, a plug 105, and a holder 107.

The connector 103 is connected to the filter 101 at a first end 109 of the filter 101 and plug 105 is connected to the filter 101 at a second end 111 of the filter 101, opposite to the first end 109.

As can be seen in Fig. 2, the holder 107 comprises a cylindrical spiral 113 that holds the filter 101 in a cylindrical shape.

In Fig. 2, the cylindrical spiral 113 is a spring. Since the spring can be purchased at low cost, the filtering unit 100 is very cost effective compared to the filtering unit 10 shown in Fig. 1.

In Fig. 2, the filtering unit 100 is arranged in a receiver 201 and connected to conduits 203, thereby forming a fuel supply system 200 connected to a stack of a fuel-cell system, for example.

Between the filter 101 of the filtering unit 100 and the receiver 201, a path is formed, as indicated by arrows 205, that is configured to guide fuel streaming out of the filtering unit 100 into a conduit 203.

In Fig. 3, a method 300 for manufacturing the filtering unit 100 according to Fig. 2 is shown.

The method 300 comprises a placing step 301, in which the holder 107 comprising the cylindrical spiral 113 is placed inside the filter 101 to hold the filter 101 in a cylindrical shape.

Further, the method 300 comprises a first connection step 303, in which the connector 103 is connected to the filter 101 at the first end 109 of the filter 101, by welding or crimping, for example.

Further, the method 300 comprises a second connection step 305, in which the plug 105 is connected to the filter 101 at the second end 111 of the filter 101, by welding or crimping, for example.

## Claims

1. Filtering unit (100) for filtering of a hydrogen containing fluid,
the filtering unit (100) comprising:
- a filter (101),
- a connector (103),
- a plug (105),
- a holder (107),
wherein the connector (103) is connected to the filter (101) at a first end (109) of the filter (101) and the plug (105) is connect to the filter (101) at a second end (111) of the filter (101), opposite to the first end (109), and
wherein the holder (107) comprises a cylindrical spiral (113) that holds the filter (101) in a cylindrical shape.

2. Filtering unit (100) according to claim 1,
**characterized in that**,
the holder (107) includes a spring.

3. Filtering unit (100) according to claim 2,
**characterized in that**,
the spring is one of a torsion spring, compression spring, or extension spring.

4. Filtering unit (100) according to any of the preceding claims,
**characterized in that**,
the holder (107) is made from at least one material of the following list of materials: wire, plastic, metal, rubber.

5. Filtering unit (100) according to any of the preceding claims,
**characterized in that**,
a slope of the spiral (113) of the holder (107) varies along the holder (107).

6. Filtering unit (100) according to claim 5,
**characterized in that**,
the holder (107) has a steeper slope at both ends than in an area between the ends.

7. Filtering unit (100) according to any of the preceding claims,
**characterized in that**,
the filter (101) is crimped or welded to the connector (103) and/or the plug (105).

8. Filtering unit (100) according to any of the preceding claims,
**characterized in that**,
the filtering unit (100) is configured to be run through by a fluid flow in a first direction from the first end (109) to the second end (111) and/or in a second direction from the second end (111) to the first end (109).

9. Fuel supply system (200),
the fuel supply system (200) comprising:
- a receiver (201) in which a filtering unit (100) according to any of claims 1 to 8 is arranged, and
- a number of conduits (203),
wherein between the filter (101) of the filtering unit (100) and the receiver (201), a path is formed that is configured to guide fuel streaming out of the filtering unit (100) into a conduit (203) of the number of conduits (203).

10. Fuel supply system (200) according to claim 9,
**characterized in that**,
the fuel supply system (200) is configured to supply a consumer with hydrogen.

11. Method (300) for manufacturing a filtering unit (100),
the method (300) comprising the following steps:
- placing (301) a holder (107) comprising a cylindrical spiral (113) inside a filter (101) to hold the filter (101) in a cylindrical shape,
- connecting (303) a connector (103) to a filter at a first end (109) of the filter (101),
- connecting (305) a plug (105) to the filter (101) at a second end (111) of the filter (101), opposite to the first end (109).
